# EUROPÄISCHE PATENTSCHRIFT

(11) **EP 2 685 054 B1**
(45) Veröffentlichungstag und Bekanntmachung des Hinweises auf die Patenterteilung: **25.11.2020**
(21) Anmeldenummer: 13174301.5
(22) Anmeldetag: 28.06.2013
(51) Int. Cl.: F01D 25/24, F02C 6/12

(54) **DIFFUSOR EINER ABGASTURBINE**
DIFFUSER OF AN EXHAUST GAS TURBINE
DIFFUSEUR D'UNE TURBINE DE GAZ D'ÉCHAPPEMENT

(30) Priorität: 09.07.2012 DE 102012211949; 17.10.2012 EP 12188898
(43) Veröffentlichungstag der Anmeldung: 15.01.2014
(73) Patentinhaber: ABB Schweiz AG, 5400 Baden (CH)
(72) Erfinder: Sofia, Alessandro, 6963 Pregassona (CH); Kreienkamp, Christian, 79713 Bad Säckingen (DE); Kästli, Daniel, 5452 Oberrohrdorf (CH); Oeschger, Daniel, CH-5430 Wettingen (CH); Städeli, Markus, 8005 Zürich (CH); Probst, Reiner, 79787 Lauchringen (DE); Rechin, Thomas, 5400 Baden (CH); Gizzi, William, 8903 Birmensdorf (CH); Joho, Marcel, 5105 Auenstein (CH); Jarusel, Matthias, 79774 Albbruck (DE); Vacca, Andrea, 4805 Brittnau (CH)
(74) Vertreter: Zimmermann & Partner Patentanwälte mbB

(56) Entgegenhaltungen:
- CH-A- 296 789
- DE-A1-102010 009 201

## Beschreibung

### Technisches Gebiet

Die Erfindung bezieht sich auf das Gebiet der mit Abgasen von Brennkraftmaschinen beaufschlagten Turbolader.

Sie betrifft eine Abgasturbine mit axialer Anströmung mit einem entnehmbaren Rotorblock.

### Stand der Technik

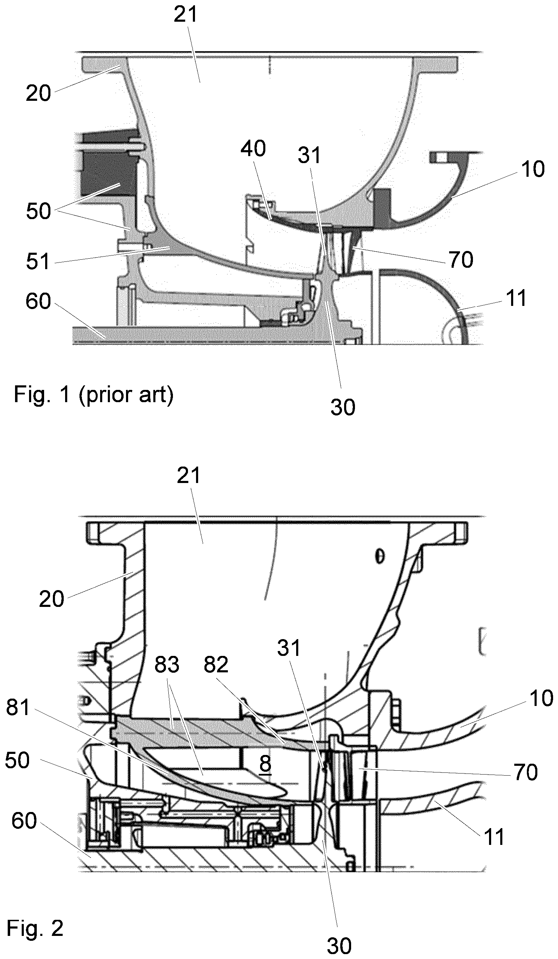

Turbolader werden zur Leistungssteigerung von Hubkolbenmotoren eingesetzt. Diese Turbolader verwenden eine Turbine welche über eine Welle ein Verdichterrad antreibt. Bei Abgasturboladern mit axial angeströmten Abgasturbinen (in diesem Dokument hiernach kurz Axialturbine genannt, wobei diese Art von Axialturbinen eben gerade aufgrund des abströmseitigen Turbinendiffusors, welcher die Strömung in die radiale Richtung umlenkt nicht vergleichbar sein soll mit einer ein- oder mehrstufigen Axialturbine einer Gasturbine) ist der Turbinendiffusor mechanisch - etwa über eine feste Schraubverbindung - mit dem Gasaustrittsgehäuse der Turbine gekoppelt. Dadurch entsteht die Notwendigkeit, beim Ausbau des Turbinenrades in Richtung des Verdichters den Turbinendiffusor vorab vom Gasaustrittsgehäuse zu lösen, was insbesondere bei eingerosteten oder anderswie verklemmten Befestigungsmitteln oder allein aufgrund der Zugänglichkeit der zu lösenden Befestigungsmittel durch die Öffnung im Lagergehäuse eine mühsame und zeitintensive Arbeit sein. Um den Ausbau sämtlicher, der Abgasströmung ausgesetzter Teile eines Abgasturboladers bei der Wartung zu vereinfachen, gibt es Bestrebungen, das Design des Abgasturboladers derart zu optimieren, dass sich der gesamte Rotorblock - also alle rotierenden Teile und zugehörige Lagerbereiche - mitsamt der Leitvorrichtung stromaufwärts der Abgasturbine, zusammen als Einheit aus dem Turbinengehäuse herauslösen lassen. Hierzu eignen sich die herkömmlich ausgestalteten, in Fig. 1 abgebildeten Axialturbinen allerdings nicht.

Die Verbindung zwischen den Bauteilen Gasaustrittsgehäuse und Turbinendiffusor unterliegen bei herkömmlichen Axialturbinen in der Regel keinen Relativbewegungen und sind durch metallischen Kontakt gegen Gasleckage abgedichtet. Es existiert somit kein Leckageströmung (Turbinenbypass) ausserhalb des Hauptströmungskanals der Turbine zwischen Turbinendiffusor und Gasaustrittsgehäuse und somit auch kein Bedarf für besondere Massnahmen zum Abdichten an dieser Schnittstelle. Dokument DE 102010009201 A1 bezieht sich auf das Gebiet der Abgasturbolader für aufgeladene Brennkraftmaschinen.

### Kurze Darstellung der Erfindung

Die Aufgabe der vorliegenden Erfindung besteht darin, bei einer axial angeströmten Abgasturbine den Turbinendiffusor, welcher die Abgasströmung stromabwärts der Turbinenlaufschaufeln aus axialen in die radiale Richtung umlenkt, mechanisch von den Turbolader-Aussengehäusen zu entkoppeln und stattdessen den Turbinendiffusor, und optional den daran befestigten Düsenring, mechanisch der Rotorbaugruppe zuzuordnen.

Erfindungsgemäss wird zur Lösung der Aufgabe eine Abgasturbine mit den Merkmalen des Anspruchs 1 vorgeschlagen. Der Turbinendiffusor wird dabei durch den Strömungskanal hindurch an den radial innenliegenden, den Strömungskanal begrenzenden Gehäuseteilen, im Fachjargon Haube genannt, welche der Baugruppe des Rotors zugeordnet sind, befestigt. Dies erfolgt über speziell ausgerichtete und ausgestaltete Streben. Dadurch entsteht eine neue Baugruppe, der sogenannte Haubendiffusor.

Das umgesetzte Gesamtkonzept ermöglicht einen gemeinsamen Ausbau von Rotor, Turbinendiffusor und Düsenring in einer Baugruppe, ohne die Aussengehäuse demontieren zu müssen.

Dadurch ergeben sich kürzere Demontage- und Wiedermontagezeiten.

Zudem kann der Einfluss von Verformungen der Aussengehäuse auf das Radialspiel der Turbinenlaufschaufeln und somit auf den Turbinenwirkungsgrad minimiert werden, da der Turbinendiffusor (inklusive des in der Regel als Abdeckring bezeichneten Bereichs direkt über den Laufschaufeln) mechanisch vom Aussengehäuse entkoppelt wird. Dies kann insbesondere für Hochdruckturbolader bei zweistufiger Aufladung relevant sein, da dort signifikante Verformungen der Aussengehäuse möglich sind, die aus Sicherheitsgründen (Vermeiden von Anstreifen der Laufschaufeln am Turbinendiffusor) ein grösseres Schaufelspitzenspiel erforderlich machen würden, falls Turbinendiffusor und Aussengehäuse fest verbunden wären.

Durch das Anbinden des Turbinendiffusors an den Rotorblock anstatt ans Gasaustrittsgehäuse wird der Turbinendiffusor vom Gasaustrittsgehäuse mechanisch entkoppelt. Um Leckageströmung (Turbinenbypass) ausserhalb des Hauptströmungskanals der Turbine durch die neue Schnittstelle zwischen Rotorbaugruppe und Aussengehäuse zu verhindern, wird vorzugsweise eine semi-statische Drosseldichtstelle eingeführt.

Sind in eine oder mehrere Streben des Haubendiffusors Luftkanäle eingelassen, lässt sich durch die Strebe Luft zum Einblasen in die Diffusorströmung leiten. Damit lässt sich die Diffusorströmung aerodynamisch dem Betriebspunkt anpassen, wodurch sich der Diffusor kürzer ausführen lässt und die Strömungsverluste reduziert werden können.

Weitere Vorteile ergeben sich aus den abhängigen Ansprüchen oder sind der detaillierten Beschreibung der Ausführungsbeispiele zu entnehmen.

### Kurze Beschreibung der Zeichnungen

Nachfolgend werden verschiedene Ausführungsformen der Erfindung anhand von Zeichnungen detailliert erläutert. Hierbei zeigt
- Fig. 1: einen entlang der Achse geführten Schnitt durch eine axial angeströmte Abgasturbine eines Abgasturbolader gemäss dem Stand der Technik,
- Fig. 2: einen entlang der Achse geführten Schnitt durch eine axial angeströmte Abgasturbine eines Abgasturbolader mit einem erfindungsgemäss ausgebildeten Turbinendiffusor,
- Fig. 3: eine vergrösserte Darstellung des erfindungsgemäss mechanisch entkoppelten Bereichs zwischen dem Diffusors und dem Gasaustrittsgehäuse der Abgasturbine nach Fig. 2,
- Fig. 4: eine schematische Darstellung der Drosseldichtung im mechanisch entkoppelten Bereich nach Fig. 3,
- Fig. 5: einen entlang der Achse geführten Schnitt durch einen Abgasturbolader mit einer Abgasturbine mit einem erfindungsgemäss ausgebildeten Turbinendiffusor, und
- Fig. 6: einen entlang der Achse geführten Schnitt durch einen Abgasturbolader mit einer Abgasturbine mit einem erfindungsgemäss ausgebildeten Turbinendiffusor mit zusätzlicher Lufteinblasevorrichtung.

### Weg zur Ausführung der Erfindung

Wie eingangs erwähnt zeigt Fig. 1 eine herkömmliche Axialturbine wie sie typischerweise in grossen Abgasturboladern eingesetzt wird. Die Axialturbine ist eine Abgasturbine, welche ein Turbinenrad 30 umfasst, welches am radial äusseren Rand der Radnabe einen Kranz mit Laufschaufeln 31 aufweist, welche einer in axialer Richtung geführten Abgasströmung ausgesetzt werden und die mit dem Turbinenrad verbundene Welle 60 in eine Rotationsbewegung versetzten. Das Abgas wird aus den Brennkammern einer Brennkraftmaschine über ein Gaseintrittsgehäuse 10 zur Turbine geführt. Das Gaseintrittsgehäuse umfasst eine Kalotte 11 mit welcher die rohrförmige Abgaszuleitung in einen ringrohrförmigen Strömungskanal überführt wird.

Unmittelbar stromaufwärts der Laufschaufeln ist eine Leitvorrichtung 70, der sogenannte Düsenring angeordnet, mit einer Vielzahl von Leitschaufeln. Bei herkömmlichen Abgasturbinen dieser Bauart ist der Düsenring entweder am Gaseintrittsgehäuse 10 oder am Gasaustrittsgehäuse 20 befestigt. Das Gasaustrittsgehäuse umfasst neben einem grossen Sammelraum einen Diffusor 40, welcher den Strömungskanal stromab der Turbinenlaufschaufeln radial nach aussen begrenzt. Auf der gegenüberliegenden Seite wird der Strömungskanal durch ein am Lagergehäuse 50 befestigtes Gehäuseteil begrenzt, der sogenannten Haube 51. Haube und Diffusor bilden also den Strömungskanal, welcher für die Umlenkung der Strömung aus der axialen in die radiale Richtung verantwortlich ist. Um bei dieser Ausgestaltung des Turbinenbereichs von der Wellenseite her die der Abgasströmung ausgesetzten und daher für die Wartung der Turbine relevanten Bauteile ausbauen zu können, muss nach dem Herausziehen des Turbinenrades zuerst die Verbindung zwischen dem Düsenring und dem Gaseintritts- oder Gasaustrittsgehäuse gelöst werden. Dies kann, wie oben erwähnt, schwierig sein, wenn die entsprechenden Befestigungsmittel eingerostet, verschmutzt oder anderweitig verklemmt sind. Auch ist der Zugang zu den Befestigungsmitteln durch die enge Öffnung im Turbinengehäuse relativ schwierig.

Aus diesem Grund wird in der erfindungsgemässen Axialturbine nach Fig. 2 der Weg für die Befestigung des Düsenrings am Rotorblock geebnet, indem zwischen der am Rotorblock befestigten Haube und dem Turbinendiffusor Verbindungsstreben eingesetzt werden. Die dadurch neu geschaffene Baugruppe kann mit Haubendiffusor 8 bezeichnet werden. Dieser Haubendiffusor 8 umfasst zwei rohrförmige Abschnitte, den am turbinenseitigen Ende radial aussenliegenden Diffusor 82 sowie die radial innenliegende Haube. Am wellenseitigen Ende des Haubendiffusors, das heisst an dem an den Sammelraum 21 im Gasaustrittsgehäuse 20 angrenzenden Bereich weisen die beiden rohrförmigen Abschnitte eine vergleichbare radiale Höhe auf, die beiden rohrförmigen Abschnitte sind somit gebogen und führen den Strömungskanal von der streng axialen Ausrichtung unmittelbar stromabwärts der Laufschaufeln 31 in die radiale Richtung über. Verbunden sind die beiden rohrförmigen Abschnitte des Haubendiffusors 8 durch mehrere, entlang dem Umfang verteilt angeordneten Streben 83. Die Streben können zwischen Diffusor und Haube geschraubt, geschweisst, gelötet oder direkt eingegossen werden. Fertigungstechnisch ist es vorteilhaft, die gesamte Baugruppe Haubendiffusor 8 als ein einziges Gussteil herzustellen.

An dem dem Turbinenrad zugewandten Ende des Turbinendiffusors 82 ist optional der Düsenring 70 befestigt. Damit lässt sich der Düsenring beim Ausbau der nunmehr auch den Turbinendiffusor umfassenden Rotorbaugruppe ebenfalls zusammen mit der Turbinenscheibe aus dem Turbinengehäuse entfernen. Optional kann der Düsenring zusätzlich mit dem inneren Turbinengehäuse, der sogenannten Kalotte verbunden sein, so dass auch diese beim Ausbau mit der Rotorbaugruppe aus dem Turbinengehäuse gezogen werden kann. Alternativ, kann der am Turbinendiffusor befestigte Düsenring mechanisch vom inneren Turbinengehäuse entkoppelt sein, in diesem Fall kann es von Vorteil sein, wenn am Düsenring Mittel vorgesehen sein, welche eine Leckageströmung durch den radial inneren Bereich des Düsenrings verhindern, beispielsweise ein diese Kreisfläche schliessender Gehäusedeckel.

Die Anzahl der Streben bestimmt die Erregerordnung von durch die Streben hervorgerufener Schwingungsanregung der Laufschaufeln (Störung im Druckfeld hinter der Rotorebene). Dabei sollte die Erregerordnung so hoch sein, dass eine Anregung der ersten Eigenfrequenz schon im tiefen Drehzahlbereich erfolgt und nicht im hohen, für den Betrieb relevanten Betriebsbereich nahe der Vollastdrehzahl. Dies ist mit einer Strebenanzahl von mindestens 7 gewährleistet.

Die Streben weisen vorteilhafterweise einen tropfenförmigen Querschnitt zur Reduzierung von Strömungsverlusten auf. Dabei sollten die Tropfenprofile rotationssymmetrisch angeordnet und radial ausgerichtet sein, so dass die Profilsehne des spiegelsymmetrischen Tropfens parallel zum Radiusvektor des Turboladers verläuft, ohne Anstellwinkel. Aufgrund der drallfreien Abströmung aus dem Diffusor im Auslegungspunkt der Turbine führt dies zu minimalen Verlusten. Sollte hingegen die Turbine so ausgelegt werden, dass ein definierter Austrittsdrall vorhanden ist, müsste ein entsprechender Anstellwinkel zwischen Profilsehne des Tropfens und Radiusvektor definiert werden. Die Querschnittsfläche der Streben sollte ausreichend gross sein, damit Eigenfrequenz des Gesamtbauteils über der Turboladerdrehzahl liegt. Durch die begrenzte radiale Bauhöhe kann der Profilquerschnitt nicht beliebig vergrössert werden, da die Länge der Profilsehen fix ist. Nur durch Aufdicken des Tropfenprofils kann die Steifigkeit erhöht werden. Jede Aufdickung ist mit einer Erhöhung der Strömungsverluste verbunden. Die obere Grenze stellt ein kreisrunder Querschnitt dar.

Bezüglich der Umfangsposition der Streben ist es vorteilhaft, eine der mindestens sieben Streben mittig bezüglich der Öffnung im Gasaustrittsgehäuse 20 anzuordnen. Bei Betrieb im Auslegungspunkt des Turboladers und der damit verbundenen drallfreien Abströmung aus der Turbine bilden sich im Gasaustrittsgehäuse zwei Wirbelzöpfe aus, die in der Mitte der Öffnung des Gasaustrittsgehäuses in Richtung Austrittsflansch des Gasaustrittsgehäuses zusammenfliessen. Mit dieser Anordnung werden die Strömungsverluste minimiert.

Die Streben 83 sind vorteilhafterweise parallel zur Turboladerachse ausgerichtet und an dem dem Sammelraum im Gasaustrittsgehäuse zugewandten Ende angeordnet, statt radial direkt hinter der Rotorebene des Turbinenrades als Nachleitrad. Auch diese Massnahme führt zu einer Minimierung der Strömungsverluste, da die Streben somit an der Position mit der kleinstmöglichen Geschwindigkeit angebracht sind. Näher an der Turbinenrotorebene und (in eher radialer Ausführung) würden zwar gewisse Vorteile bezüglich der Steifigkeit der Baugruppe Haubendiffusor bringen, allerdings müssten dafür höhere Strömungsverluste hingenommen werden, da dort die Geschwindigkeiten in der Strömung höher sind. Zusätzlich wären höhere Schwingungsanregungen der Laufschaufeln zu erwarten.

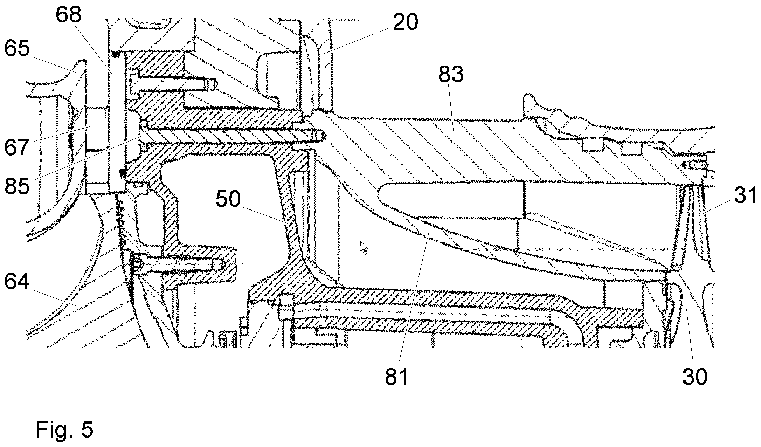

Gemäss Fig. 5 werden zur Befestigung des Haubendiffusors am Lagergehäuse 50, welches ebenfalls der aus dem Turbinengehäuse als eine Einheit ausbaubaren Rotorbaugruppe angehört, erfindungsgemäss auf einer möglichst grossen radialen Höhe, also im Bereich des äusseren Randes der Haube 81 mehrere Befestigungsmittel 85, beispielsweise Schraube, von der Verdichterseite her durch Bohrungen im Lagergehäuse 50 in entsprechende Bohrungen am Haubendiffusor geführt. Sind die Befestigungsmittel 85 auf einer ausreichend grossen radialen Höhe angeordnet, ist neben der dadurch gewonnenen grösstmöglichen Steifigkeit des Haubendiffusors die Zugänglichkeit zu den Befestigungsmitteln (Schraubenkopf) bei ausgebauter Rotorgruppe jederzeit gegeben, selbst wenn das Verdichterrad 64 nicht von der Welle entfernt worden ist. Dadurch lässt sich bei Bedarf - etwa zur Reinigung oder zum Austausch - der Haubendiffusor von der Rotorgruppe lösen, ohne dass zuvor weitere Bauteile entfernt werden müssen. Um eine Verschmutzung im Betrieb zu verhindern und die Strömung im Verdichterdiffusor nicht negativ zu beeinträchtigen sind die Befestigungsmittel gegen den Strömungskanal im Verdichterdiffusor abgedeckt. Als Abdeckung eignet sich optional das ringförmige Gehäuse 68 der Leitvorrichtung im Verdichterdiffusor (Düsenring), an dem die einzelnen Leitschaufeln 67 befestigt sind. Der hinter der Abdeckung liegende Hohlraum ist optional mittels umlaufender Dichtungsringe gegenüber dem Strömungskanal des Verdichters abgedichtet, um ein Eindringen des allenfalls verschmutzten Strömungsmediums zu verhindern.

Wird der Turbinendiffusor vom Gasaustrittsgehäuse mechanisch entkoppelt, beispielsweise indem der Turbinendiffusor, wie oben beschrieben, an die Rotorbaugruppe anstatt ans Gasaustrittsgehäuse angebunden, wird eine neue Schnittstelle zwischen Turbinendiffusor und Gasaustrittsgehäuse geschaffen. Es entsteht zwischen diesen beiden Bauteilen ein Spalt, der als Leckagepfad um die Turbinenstufe herum wirkt. Es besteht die Gefahr, dass sich eine Leckageströmung A ausserhalb des Hauptströmungskanals der Turbine ausbildet (Turbinenbypass), die sich negativ auf den Turbinenwirkungsgrad auswirkt.

Durch Relativbewegungen im Betrieb zwischen Turbinendiffusor und Gasaustrittsgehäuse besitzt der Spalt im transienten Betrieb eine zeitlich veränderliche Geometrie. Um Verluste im Turbinenwirkungsgrad durch allfällige Leckageströmung zu begrenzen, muss der Spalt in allen relevanten Betriebszuständen ausreichend abgedichtet werden. Hierfür wird erfindungsgemäss eine semi-statische Dichtung vorgesehen. Besonders geeignet sind Dichtungen auf Kolbenringbasis oder alternativ auf Basis von Lamellenringen. Beide Dichtungstypen sind Drosseldichtungen und werden in der Regel zwischen konzentrischen Zylinderflächen ohne radiale Relativbewegungen und Achsversatz (Desaxierung) eingesetzt. Für den hier vorliegenden Einsatzzweck muss jedoch im Betrieb mit starken radialen Relativbewegungen und Desaxierung zwischen den Zylinderflächen (Turbinendiffusor und Gasaustrittsgehäuse) gerechnet werden. Ein weiteres Problem, das sich bei einer herkömmlichen Anwendung solcher Drosseldichtungen nicht stellt, ist die Verschmutzung durch Abgasrückstände aus der Schwerölverbrennung.

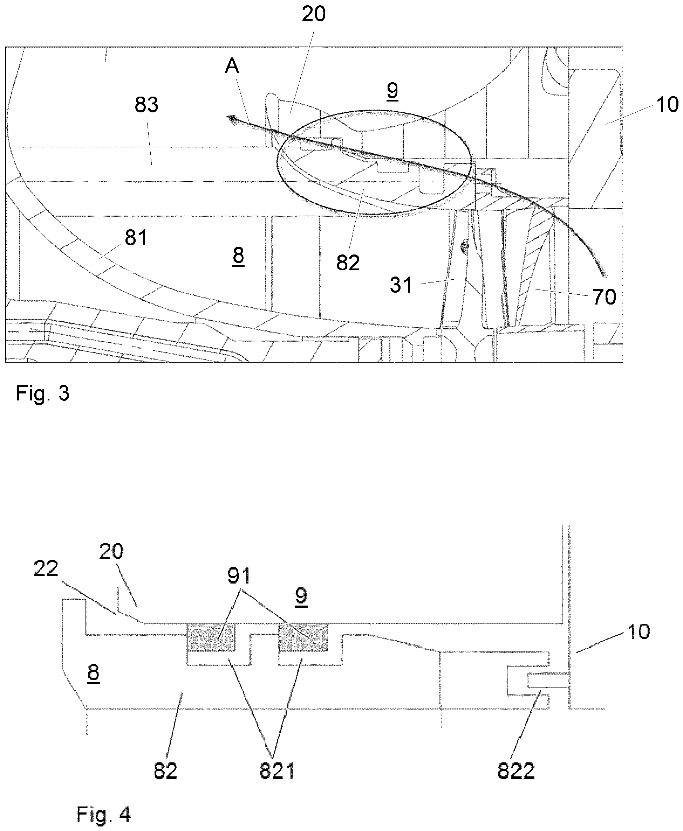

Die anhand der Fig. 3 und der Fig. 4 erläuterte erfindungsgemässe Drosseldichtung umfasst eine Anordnung von metallischen Dichtungsringen 91 (Kolbenringen, Lamellenringen oder ähnliche Elemente) in Nuten 821 auf dem Aussendurchmesser des Turbinendiffusors 82. Die Nutbreite wird dabei so gewählt, dass es nie zum Klemmen aufgrund der radialen und axialen Relativbewegungen des führenden Bauteils am Kolbenring kommt. Zudem kann optional durch die Ausbildung schräger Nutwände verhindert werden, dass bei einer Desaxierung zwischen Turbinendiffusor und Gasaustrittsgehäuse, also bei einer Schiefstellung des Turbinendiffusors bezüglich dem Gasaustrittsgehäuse, ein Dichtungsring in der Nut verklemmt. Die Schräge der Nutwände (Winkel zur radialen Richtung) entspricht dabei vorteilhafterweise der zu erwartenden Schiefstellung im Betrieb. Insbesondere bei knapp bemessenen Spaltbreiten helfen die schrägen Nutwände ein Klemmen des Dichtungsrings zu verhindern.

Bei der Montage des Rotors wird der Turbinendiffusor 82 in das Gasaustrittsgehäuse 20 eingefahren (in der Fig. 3 von links). Über eine Einfahrschräge 22 des Gasaustrittsgehäuses werden dabei die Dichtungsringe 91 gegen den Innendurchmessers des Gasaustrittsgehäuses 20 verspannt. Im Betrieb stellt sich so eine Anpresskraft der Dichtungsringe gegen den Innendurchmessers des Gasaustrittsgehäuses ein, die sich aus der Vorspannung des Dichtungsrings und einer resultierenden radial nach aussen wirkenden Druckkraft auf den Dichtungsring ergibt. Bei Kolbenringen ist der Effekt der radialen Druckkraft je nach Geometrie von Kolbenring, Nut und Dichtspalt deutlich nutzbar. Ein flacher Kolbenring weist eine hohe Anpassungsfähigkeit gegenüber der axialen Lauffläche auf und ist gegenüber Flattern weniger anfällig, wohingegen ein hochkant stehender, schmaler Kolbenring auf eine hohe Flächenpressung radial und axial ausgelegt ist.

Bei Lamellenringen ist aufgrund der fertigungsbedingten Bauform (Verhältnis Durchmesser zu Querschnitt) die resultierende radiale Druckkraft vernachlässigbar klein.

Fig. 4 zeigt eine schematische Skizze der Dichtungsanordnung mit radial anliegenden Dichtungsringen. Die Anordnung weist optional 1 oder 2 Dichtungsringe auf. Zusätzlich kann optional Sperrluft stromauf der Dichtungsringe oder zwischen den Dichtungsringen eingeblasen werden zum Verhindern von Verschmutzung im Spalt durch Abgasrückstände. Ebenfalls zum Verhindern von Verschmutzungen im Dichtungsbereich kann stromauf der Dichtungsstellen eine Labyrinthdichtung 822 vorgesehen sein, welche zwar keine wesentliche Drosselwirkung erzeugt, aber durch die Umlenkwirkung zum Abscheiden von Abgasrückständen beiträgt. In den Spalt zwischen dem Turbinendiffusor und dem Gasaustrittsgehäuse eindringende Abgasrückstände können zum Verklemmen der Dichtungsringe führen. Daher muss eine Verschmutzung der Dichtparte möglichst vermieden werden.

Alternativ zu den Dichtungsringen kann ein im Gasaustrittsgehäuse oder im Turbinendiffusor vormontiertes Kompensatorblech zur Abdichtung des Spalts eingesetzt werden. Das Kompensatorblech wird dabei durch Montagevorspannung an beiden Bauteilen anliegen. Betriebsverformungen können durch die Formgebung des Blechs gut aufgenommen werden.

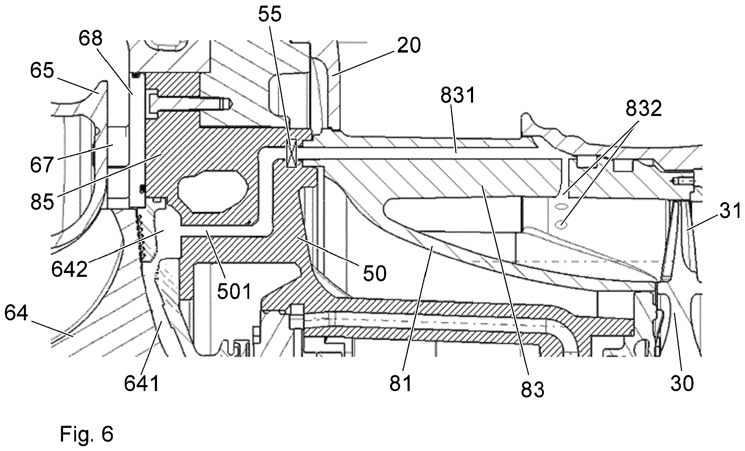

Optional können gemäss Fig. 6 in eine oder mehrere Streben 83 des Haubendiffusors Luftkanäle 831 eingelassen sein. Durch diese Luftkanäle lässt sich Luft zum Einblasen in den Diffusorbereich der Turbine leiten. Dabei wird in der dargestellten Ausführungsform die Luft aus dem Rückraum 641 des Verdichterrades entnommen und in einer Luftkammer 642 gesammelt. Über eine oder mehrere Luftleitungen 501 im Lagergehäuse und ein optionales Ventil 55 wird die Luft dem Luftkanal 831 in der Strebe zugeführt. Der Luftkanal mündet in einen weiteren Sammelraum, von wo aus Zuleitungen zu den Einblasöffnungen 832 im Diffusor führen.

Beim axialen Turbolader wird auf der Turbinenseite zur verlustoptimalen Verzögerung der Strömung stromab der Turbine ein Turbinendiffusor eingesetzt. Dieser wird optimal auf einen Nennlast-Betriebspunkt ausgelegt. Es wird dabei ein bestimmtes Diffusoreintritt zu Diffusoraustritt Flächenverhältnis realisiert und durch die Wahl eines optimalen Winkels ergibt sich eine geforderte Länge. Die axiale Länge des Turbinendiffusors geht bei axialen Turboladern direkt in die Baulänge ein und hat damit unmittelbaren Einfluss auf die Kompaktheit des Turboladers. Um zu lange Baulängen vermeiden zu können, wird häufig ein Kompromiss zwischen axialer Baulänge und optimaler Druckrückgewinn im Diffusor eingegangen.

Ferner sind durch die Auslegung des Diffusors auf einen Betriebspunkt in angrenzenden Arbeitsbereichen deutlich höhere Verluste im Turbinendiffusor beispielsweise durch Ablösung der Strömung an der Aussenwand zu erwarten. In Diffusoren kommt es bei zu hohen Öffnungswinkeln zur Ablösung am Aussenbereich des Diffusorkanals. Die Ablösung der Strömung verursacht zusätzliche Druckverluste. Diese Ablösungen werden meist durch einen sehr flachen Öffnungswinkel des Diffusors vermieden, was wiederum zur einer erhöhten axialen Baulänge führt. Durch das Einblasen oder Absaugen von Luft in die Diffusorströmung kann der Diffusor im Betrieb aerodynamisch dem Betriebspunkt angepasst werden. Damit kann entweder der Diffusor kürzer ausgeführt oder es können die Strömungsverluste reduziert werden. Es ist allgemein bekannt, dass das Strömungsverhalten im Wandbereich durch Einblasen oder Absaugen von Luft hinsichtlich des Anlegeverhaltens beeinflusst werden kann. (Tragwerksströmungen an Flugzeugen, Strömungsoptimierte Rennwagen, etc.) Um den Turbinendiffusor aerodynamisch anzupassen soll, am Turbinendiffusor selbst Luft (vom Verdichterrückraum) kurz vorm Ablöse- bzw. Umschlagspunktpunkt eingeblasen werden um ein Anliegen der Strömung zu erreichen. Dabei soll nur Luft eingeblasen werden, wenn keine anliegende Strömung vorliegt, beispielsweise im Teillastbereich. Dies kann beispielsweise über ein schaltbares Ventil 55 realisiert werden. Ferner kann in einem zwei- oder mehrstufigem Turboladersystem auch Heissgas oder Verdichterluft einer höheren Stufe verwendet werden, welches beispielsweise über ein WasteGate oder Motorenbypass abgeführt wird. Dieses Gas kann über einen externen Anschluss im Bereich des Ventils 55 zugeführt werden (nicht dargestellt). Das zur Einblasung verwendete Gas wird über im Haubendiffusor vorhandene Stege zum Einblaseort geführt. Alternativ zur Einblasung kann ein Absaugen der Grenzschicht erfolgen und damit der Öffnungswinkel der Strömung vergrössert werden. Hiefür ist im Bereich des Ventils 55 eine Absaugleitung vorzusehen, welche die Abgesaugte Luft aus dem Turbolader führt.

### Bezugszeichenliste

- 10: Gaseintrittsgehäuse
- 11: Kalotte (inneres Gaseintrittsgehäuse)
- 20: Gasaustrittsgehäuse
- 21: Sammelraum
- 22: Einfahrschräge
- 30: Turbinenrad
- 31: Laufschaufeln des Turbinenrades
- 40: Turbinendiffusor
- 50: Lagergehäuse
- 501: Luftkanal im Lagergehäuse
- 51: Haube
- 55: Ventil
- 60: Welle
- 64: Verdichterrad
- 641: Rückraum des Verdichterrades
- 642: Luftkammer
- 65: Verdichtergehäuse
- 67: Leitschaufeln der Leitvorrichtung im Verdichterdiffusor
- 68: Gehäuse der Leitvorrichtung im Verdichterdiffusor
- 70: Leitvorrichtung (Düsenring)
- 8: Haubendiffusor
- 81: Haube
- 82: Turbinendiffusor
- 821: Nuten im Diffusor
- 822: Labyrinthdichtung
- 83: Strebe
- 831: Luftkanal in der Strebe
- 832: Einblasöffnungen am Diffusor
- 85: Befestigungsmittel (Schraube)
- 9: Drosseldichtung
- 91: Dichtungsring
- A: Leckageströmung

## Patentansprüche

1. Abgasturbine mit axialer Anströmung, umfassend ein Turbinenrad (30) mit einer Vielzahl von Laufschaufeln (31), einer Leitvorrichtung (70) zum Ausrichten der Strömung auf die Laufschaufeln des Turbinenrades sowie einen Strömungskanal, welcher stromabwärts der Laufschaufeln des Turbinenrades angeordnet ist um die Strömung von den Laufschaufeln zu einem Gasaustrittsgehäuse zu leiten und hierfür eine Krümmung aus der axialen Richtung in die radiale Richtung aufweist, wobei der Strömungskanal radial aussen durch einen Turbinendiffusor (40, 82) und radial innen durch ein Gehäuseteil (51, 81) begrenzt ist, der Turbinendiffusor (82) von dem Gasaustrittsgehäuse (20) mechanisch entkoppelt ist, **dadurch gekennzeichnet, dass** der Turbinendiffusor (82) und das den Strömungskanal nach radial innen begrenzende Gehäuseteil (81) durch Streben (83) im Strömungskanal miteinander verbunden sind.

2. Abgasturbine nach Anspruch 1, wobei der Turbinendiffusor (82), das den Strömungskanal nach radial innen begrenzende Gehäuseteil (81) und die Streben (83) einstückig ausgebildet sind.

3. Abgasturbine nach Anspruch 1 oder 2, wobei zwischen dem Turbinendiffusor (82), und dem den Strömungskanal nach radial innen begrenzenden Gehäuseteil (81) mindestens sieben Streben (83) angeordnet sind.

4. Abgasturbine nach einem der Ansprüche 1 bis 3, wobei die Leitvorrichtung (70) am Turbinendiffusor befestigt ist, um beim Ausbau der Baugruppe (8) bestehend aus dem Turbinendiffusor (82), dem den Strömungskanal nach radial innen begrenzenden Gehäuseteil (81) und den Streben (83) zusammen mit dieser Baugruppe (8) aus dem Gehäuse der Turbine gezogen zu werden.

5. Abgasturbine nach Anspruch 1, wobei in einem Spalt zwischen dem Turbinendiffusor (82) und dem Gasaustrittsgehäuse (20) eine Drosseldichtung (9) angeordnet ist.

6. Abgasturbine nach Anspruch 1, wobei durch die Streben (83) mindestens ein Luftkanal (831) führt, welcher mindestens eine Luftkanal (831) mit Einblasöffnungen (832) am Turbinendiffusor verbunden ist.

7. Abgasturbine nach Anspruch 5, wobei die Drosseldichtung (9) mindestens einen in einer Nut (821) im Turbinendiffusor (82) angeordneten Dichtungsring (91) aufweist.

8. Abgasturbolader, umfassend eine Abgasturbine nach einem der Ansprüche 1 bis 7 sowie eine in einem Lagergehäuse (50) gelagerte Welle mit einem darauf befestigten Verdichterrad (64), wobei die Baugruppe (8), bestehend aus dem Turbinendiffusor (82), dem den Strömungskanal nach radial innen begrenzenden Gehäuseteil (81) und den Streben (83), mittels Befestigungsmitteln (85) von der Verdichterseite des Lagergehäuses (50) her am Lagergehäuse (50) befestigt ist.

## Claims

1. Exhaust-gas turbine with axial incident flow, comprising a turbine wheel (30) with a multiplicity of rotor blades (31), with a guide apparatus (70) for directing the flow on to the rotor blades of the turbine wheel, and comprising a flow channel which is arranged downstream of the rotor blades of the turbine wheel in order to conduct the flow from the rotor blades to a gas outlet housing and, for this purpose, has a curvature from the axial direction into the radial direction, wherein the flow channel is delimited radially at the outside by a turbine diffuser (40, 82) and radially at the inside by a housing part (51, 81), the turbine diffuser (82) is mechanically decoupled from the gas outlet housing (20), **characterized in that** the turbine diffuser (82) and the housing part (81) which delimits the flow channel radially to the inside are connected to one another by struts (83) in the flow channel.

2. Exhaust-gas turbine according to Claim 1, wherein the turbine diffuser (82), the housing part (81) which delimits the flow channel radially to the inside and the struts (83) are formed as a single piece.

3. Exhaust-gas turbine according to Claim 1 or 2, wherein at least seven struts (83) are arranged between the turbine diffuser (82) and the housing part (81) which delimits the flow channel radially to the inside.

4. Exhaust-gas turbine according to any of Claims 1 to 3, wherein the guide apparatus (70) is fastened to the turbine diffuser in order that, during the dismounting of the assembly (8) composed of the turbine diffuser (82), the housing part (81) which delimits the flow channel radially to the inside and the struts (83), said guide apparatus is pulled out of the housing of the turbine together with said assembly (8).

5. Exhaust-gas turbine according to Claim 1, wherein a throttle seal (9) is arranged in a gap between the turbine diffuser (82) and the gas outlet housing (20).

6. Exhaust-gas turbine according to Claim 1, wherein at least one air channel (831) leads through the struts (83), which at least one air channel (831) is connected to blow-in openings (832) on the turbine diffuser.

7. Exhaust-gas turbine according to Claim 5, wherein the throttle seal (9) has at least one seal ring (91) which is arranged in a groove (821) in the turbine diffuser (82).

8. Exhaust-gas turbocharger comprising an exhaust-gas turbine according to any of Claims 1 to 7 and comprising a shaft which is mounted in a bearing housing (50) and which has a compressor wheel (64) fastened thereto, wherein the assembly (8) composed of the turbine diffuser (82), the housing part (81) which delimits the flow channel radially to the inside and the struts (83) is fastened to the bearing housing (50) by fastening means (85) from the compressor side of the bearing housing (50) .

## Revendications

1. Turbine à gaz d'échappement à soufflage axial, comprenant une roue de turbine (30) dotée d'une pluralité d'aubes mobiles (31), d'un dispositif de guidage (70) pour orienter l'écoulement sur les aubes mobiles de la roue de turbine, ainsi qu'un canal d'écoulement qui est disposé en aval des aubes mobiles de la roue de turbine pour diriger l'écoulement des aubes mobiles vers un carter de sortie de gaz et qui présente à cet effet une courbure allant de la direction axiale vers la direction radiale, dans laquelle le canal d'écoulement est limité radialement à l'extérieur par un diffuseur de turbine (40, 82) et radialement à l'intérieur par une partie de carter (51, 81), le diffuseur de turbine (82) étant découplé mécaniquement du carter de sortie de gaz (20),
**caractérisée en ce que** le diffuseur de turbine (82) et la partie de carter (81) limitant le canal d'écoulement radialement vers l'intérieur sont reliés ensemble par des entretoises (83) dans le canal d'écoulement.

2. Turbine à gaz d'échappement selon la revendication 1, dans laquelle le diffuseur de turbine (82), la partie de carter (81) limitant le canal d'écoulement radialement vers l'intérieur, et les entretoises (83) sont réalisés d'un seul tenant.

3. Turbine à gaz d'échappement selon la revendication 1 ou 2, dans laquelle au moins sept entretoises (83) sont disposées entre le diffuseur de turbine (82) et la partie de carter (81) limitant le canal d'écoulement radialement vers l'intérieur.

4. Turbine à gaz d'échappement selon l'une quelconque des revendications 1 à 3, dans laquelle le dispositif de guidage (70) est fixé au diffuseur de turbine afin de pouvoir être extrait en même temps que le sous-ensemble (8) composé du diffuseur de turbine (82), de la partie de carter (81) limitant le canal d'écoulement radialement vers l'intérieur et des entretoises (83) lorsque ce sous-ensemble est démonté.

5. Turbine à gaz d'échappement selon la revendication 1, dans laquelle un joint d'étranglement (9) est disposé dans un espace entre le diffuseur de turbine (82) et le carter de sortie de gaz (20).

6. Turbine à gaz d'échappement selon la revendication 1, dans laquelle au moins un conduit d'air (831) passe à travers les entretoises (83) et est relié à au moins un conduit d'air (831) doté d'orifices d'injection (832) sur le diffuseur de turbine.

7. Turbine à gaz d'échappement selon la revendication 5, dans laquelle le joint d'étranglement (9) présente au moins une bague d'étanchéité (91) disposée dans une rainure (821) dans le diffuseur de turbine (82).

8. Turbosoufflante à gaz d'échappement, comprenant une turbine à gaz d'échappement selon l'une quelconque des revendications 1 à 7 ainsi qu'un arbre logé dans un logement de palier (50) et doté d'une roue de compresseur (64) fixée à celui-ci, le sous-ensemble (8) composé du diffuseur de turbine (82), de la partie de carter (81) limitant le canal d'écoulement radialement vers l'intérieur et des entretoises (83) étant fixé au logement de palier (50) à l'aide de moyens de fixation (85) depuis le côté compresseur du carter de palier (50) .
